# EUROPEAN PATENT APPLICATION

(11) **EP 4 715 999 A1**
(43) Date of publication of application: **25.03.2026**
(21) Application number: 25736304.4
(22) Date of filing: 03.01.2025
(51) Int. Cl.: H01M 50/533, H01M 50/536, H01M 10/0585, H01M 10/052, H01M 4/02

(54) **ANODE FOR LITHIUM METAL BATTERY, ELECTRODE ASSEMBLY FOR LITHIUM METAL BATTERY, AND LITHIUM METAL BATTERY**

(30) Priority: 03.01.2024 KR 20240001107
(71) Applicant: LG Energy Solution, Ltd., Seoul 07335 (KR)
(72) Inventor: LEE, Areum, Daejeon 34122 (KR)
(74) Representative: Goddar, Heinz J.
(86) International application number: PCT/KR2025/000153
(87) International publication number: WO 2025/147150

(57) **Abstract**

The present application may provide an anode for a lithium metal battery and an electrode assembly for a lithium metal battery, in which, in a battery system using lithium metal as the anode, the anode includes a main body portion and an anode tab extending from one side edge of the main body portion, connected to a metal lead, and including lithium metal, wherein the anode tab is configured such that the width (W1) of the end portion thereof and the width (W2) of a connection portion connecting the end portion and the main body portion are different, thereby preventing the problem of the tab deviating from the range of the lead and spreading when the anode tab and the lead are welded, thus enabling problems occurring during sealing and adverse effects on battery performance to be minimized.

## Description

### REFERENCE TO RELATED APPLICATIONS

This application was filed with the Korean Intellectual Property Office on January 3, 2024, and January 3, 2025, respectively, and this application claims priority to Korean Patent Application No. 10-2024-0001107 and Korean Patent Application No. 10-2025-0000904, in the Korean Intellectual Property Office, the disclosures of which are incorporated herein in their entireties by reference.

### TECHNICAL FIELD

The present disclosure relates to an anode for a lithium metal battery, an electrode assembly for a lithium metal battery and a lithium metal battery including at least one of the anode and the electrode assembly.

### BACKGROUND ART

Recently, demands on mobile devices such as smartphones, tablet PCs, and wireless earphones are increasing. Further, as development of electric vehicles, storage batteries for energy storage, robots and satellites begins in earnest, research on high-performance secondary batteries which may be repeatedly charged and discharged as an energy source is being actively performed.

Currently commercialized secondary batteries include a nickel cadmium battery, a nickel hydrogen battery, a nickel zinc battery and a lithium secondary battery. Among the same, the lithium secondary battery barely causes memory effects compared to a nickel-based secondary battery, so as to provide advantages of being freely charged and discharged, providing a significantly low self-discharge rate, and providing a high energy density.

Batteries are being manufactured according to the output and specifications required in various fields. In order to guarantee a desired output and the like, an electrode tab is welded to a lead to be electrically connected. The lead is generally made of a metal material.

Meanwhile, a lithium metal battery uses a metal lithium as an anode. Although the metal lithium is significantly advantageous in increasing energy density, the metal lithium includes a soft feature compared to copper (Cu) which was mainly used in prior art. Accordingly, during a process in which an anode tab and a lead are welded, the anode tab may extend, and as the anode tab extends, the same may deviate from the bounds of the lead. In such a case, problems during sealing may arise, and effects may be inflicted upon general deterioration in the performance of a battery.

### SUMMARY OF THE INVENTION

Provided in the present disclosure are an anode for a lithium metal battery, an electrode assembly for a lithium metal battery and a lithium metal battery, which, in a battery system which uses a lithium metal as an anode, may prevent the problem in which, when an anode tab and a lead are welded, the anode tab extends by deviating from the bounds of the lead, thereby minimizing problems that arise during sealing and negative effects that may be inflicted on the performance of a battery.

According to an exemplary embodiment of the present disclosure, an anode for a lithium metal battery includes a body part and an anode tab extending from one side edge of the body part and connected to a metal lead, and includes a lithium metal, wherein the anode tab may be configured such that a width W₁ of an end part is different from a width W₂ of a connecting part that connects the end part and the body part.

According to an exemplary embodiment of the present disclosure, in the anode for the lithium metal battery, the width W₁ of the end part may be narrower than the width W₂ of the connecting part.

According to an exemplary embodiment of the present disclosure, in the anode for a lithium metal battery, a ratio (W₁/W₂) of the width W₁ of the end part and the width W₂ of the connecting part may be in a range of 0.1 to 0.6.

According to an exemplary embodiment of the present disclosure, in the anode for the lithium metal battery, the anode tab may have a shape in which a width gradually decreases in a direction away from the body part.

According to an exemplary embodiment of the present disclosure, an electrode assembly for a lithium metal battery includes an anode for a lithium metal battery having a body part and an anode tab extending from one side edge of the body part and includes a lithium metal, and a metal lead connected to the anode tab, wherein the metal lead and the anode tab are connected at a connection area A_{C} that does not extend beyond an outer side border of the metal lead.

According to an exemplary embodiment of the present disclosure, in the electrode assembly for the lithium metal battery, the anode tab is joined to the metal lead by welding, wherein the anode tab, before being joined by the welding, may be configured such that a width W₁ of an end part is narrower than a width W₂ of the connecting part that connects the end part and the body part.

According to an exemplary embodiment of the present disclosure, in the electrode assembly for the lithium metal battery, in the anode tab, after being joined by the welding, a width W₁' of the end part may be equal to or smaller than a width W_{L} of the metal lead of a position corresponding to the end part.

According to an exemplary embodiment of the present disclosure, in the electrode assembly for the lithium metal battery, a ratio (W₁'/W_{L)} of the width W₁' of the end part and the width W_{L} of the metal lead may be in a range of 0.5 to 1.

According to an exemplary embodiment of the present disclosure, in the electrode assembly for the lithium metal battery, an area A₁ of a connection area A_{C} to an area A₂ of the anode tab may be 50% or greater.

According to an exemplary embodiment of the present disclosure, the electrode assembly for the lithium metal battery includes an anode for a lithium metal battery including a plurality of anodes having a one-by-one stacked structure including a first anode and a second anode and a metal lead, wherein each of the plurality of anodes includes a body part and an anode tab extending from one side edge of the body part and including a lithium metal, wherein the first anode is positioned such that the anode tab is in direct contact to the metal lead to be connected to the metal lead, and the second anode is positioned at an outermost part of the stacked structure such that it is not in direct contact to the metal lead, and wherein the metal lead and the anode tab of the first anode are connected at a connection area A_{C} that does not extend beyond an outer side border of the metal lead.

According to an exemplary embodiment of the present disclosure, in the electrode assembly for the lithium metal battery, the anode tab of the first anode is joined to the metal lead by welding, wherein the plurality of anodes are joined by welding to form the stacked structure, and wherein the anode tab of the first anode, before being joined by the welding, may be configured such that a width W₁₁ of an end part is narrower than a width W₁₂ of a connecting part that connects the end part and the body part, and an anode tab of the second anode is configured such that a width W₂₁ of an end part is narrower than a width W₂₂ of a connecting part that connects the end part and the body part.

According to an exemplary embodiment of the present disclosure, in the electrode assembly for the lithium metal battery, the plurality of anodes form the stacked structure by being joined by welding such that the end part of each anode tab matches, and a corresponding area A_{E} which is formed when each joint area A_{J} connected between the anodes is projected perpendicularly to a plane at which the metal lead is positioned and does not extend beyond the outer side border of the metal lead.

According to an exemplary embodiment of the present disclosure, in the electrode assembly for the lithium metal battery, the width W₁₁ of the end part of the anode tab of the first anode, before being joined by the welding, may be equal to or wider than the width W₂₁ of the end part of the anode tab of the second anode.

According to an exemplary embodiment of the present disclosure, in the electrode assembly for the lithium metal battery, the width W₁ of the end part of each anode tab of the plurality of anodes, before being joined by the welding, may gradually widen from the second anode to the first anode.

According to an exemplary embodiment of the present disclosure, in the electrode assembly for the lithium metal battery, a width W₁₁' of an end part of an anode tab of the first anode and a width W₂₁' of an end part of an anode tab of the second anode, after being joined by the welding, may be equal to or smaller than the width W_{L} of the metal lead at a position corresponding to the end part of the anode tab of the first anode.

According to an exemplary embodiment of the present disclosure, an electrode for a lithium metal battery may include at least one of the anode for the lithium metal battery, and the electrode assembly for the lithium metal battery which are described above. The lithium metal battery may be a lithium-sulfur battery or a lithium air battery.

### Effects of the Invention

According to the exemplary embodiments, it is possible that a battery system which uses a lithium metal as an anode may prevent a problem in which, when an anode tab and a lead are welded, the anode tab extends by deviating from the bounds of the lead, thereby minimizing problems that arise during sealing and negative effects that may be inflicted on the performance of a battery.

### BRIEF DESCRIPTION OF DRAWINGS

Drawings illustrated in the present disclosure are according to examples of the present disclosure, and a ratio of a width, a breadth or a thickness (or a height) of each configuration is to describe the present disclosure in detail, and the ratio thereof may be different from reality. Further, in a coordinate system illustrated in a drawing, each axis is perpendicular to each other, and a direction indicated by an arrow may be a + direction, and a complete opposite direction of the direction indicated by the arrow (a direction rotated by 180 degrees) may be a - direction.
FIG. 1 is a plan view illustrating a front surface, which is at least one part of an electrode assembly for a lithium metal battery according to an exemplary embodiment of the present disclosure.
FIG. 2 and FIG. 3 are plan views illustrating a rear surface, which is at least one part of the electrode assembly for the lithium metal battery according to an exemplary embodiment of the present disclosure.
FIG. 4 and FIG. 5 are perspective views illustrating at least one part of the electrode assembly for the lithium metal battery according to an exemplary embodiment of the present disclosure.
FIG. 6 is a plan view illustrating a rear surface, which is at least one part of the electrode assembly for the lithium metal battery according to an exemplary embodiment of the present disclosure.

### DETAILED DESCRIPTION

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The exemplary embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component having the same reference numeral is shown in multiple drawings, the multiple drawings may not all represent one exemplary embodiment.

In the following description, singular expressions include plural expressions unless the context clearly dictates otherwise. It will be understood that the terms "comprise," "consist," and the like as used indicate the presence of features, numerals, steps, operations, components, parts or combinations thereof described in the specification, and do not preclude the presence of additional possibility of one or more other features, numerals, steps, operations, components, parts or combinations thereof.

Further, in the following description, expressions such as an upper side, top, a lower side, bottom, a side, a front side and a back side are expressed based on the direction shown in the drawing, and if the direction of the object changes, the same may be expressed differently.

Further, in the specification and claims, terms including ordinal numbers such as "first," "second," etc. may be used to distinguish between components. These ordinal numbers are used to distinguish identical or similar components from each other, and the meaning of the terms should not be interpreted limitedly due to the use of such ordinal numbers. For example, components combined with these ordinal numbers should not be interpreted as having a limited order of use or arrangement based on the number. If necessary, each ordinal number may be used interchangeably.

Hereinafter, exemplary embodiments of the present disclosure will be described in detail with reference to the attached drawings. However, the spirit of the present disclosure may not be limited to the presented exemplary embodiments. For example, a common person skilled in the art who understands the spirit of the present disclosure may suggest other exemplary embodiments that are included within the scope of the spirit of the present disclosure through addition, change, or deletion of components; however, such exemplary embodiments are also intended to be included within the scope of the spirit of the present disclosure. The shapes and sizes of elements in the drawings may be exaggerated for clearer explanation.

In the present disclosure, a battery may be used with the identical meaning to a cell. Further, a battery or a cell may be a term to collectively refer to a battery cell, a battery module including the battery cell, or a battery pack, which are units thereof.

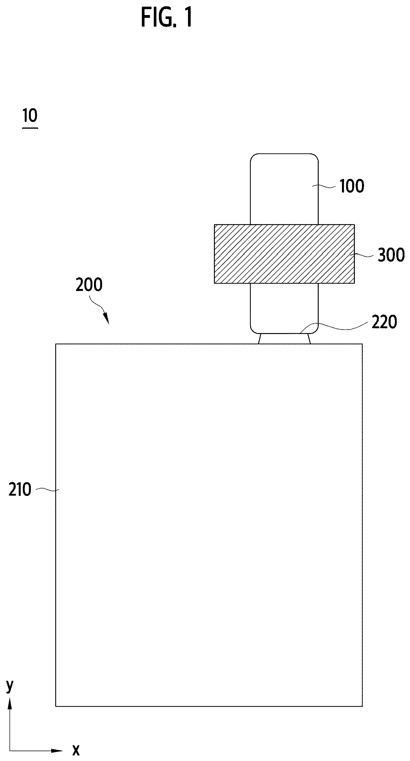

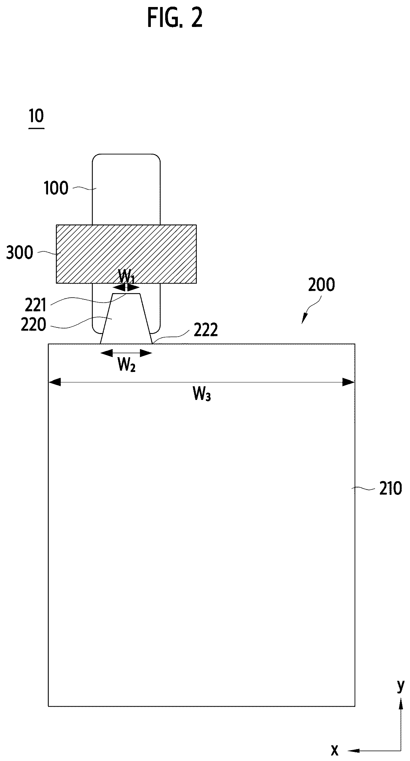

FIG. 1 is a plan view illustrating a front surface, which is at least one part of an electrode assembly 10 for a lithium metal battery according to an exemplary embodiment of the present disclosure. FIG. 2 is a plan view illustrating a rear surface, which is at least one part of the electrode assembly 10 for the lithium metal battery according to an exemplary embodiment of the present disclosure. FIG. 2 illustrates a metal lead 100 and an anode 200 for a lithium metal battery only being in contact before being welded and joined.

The electrode assembly 10 for the lithium metal battery may include the metal lead 100 and the anode 200 for the lithium metal battery. Meanwhile, although not illustrated in drawings, the electrode assembly 10 for the lithium metal battery may include a cathode and a membrane if needed, and the membrane may be interposed between the cathode and the anode 200 for the lithium metal battery.

The metal lead 100 may be connected to the anode 200 for the lithium metal battery. Further, both may be electrically connected. In the present disclosure, the meaning of being electrically connected may signify a state in which, when a connected target is connected by a connecting means, electricity may flow in each target that is connected by constituting an electric circuit. Although the connecting means is not limited in particular as long as electrical connection is possible, the same may be direct contact between connected targets, an electric wire in which electricity may flow, and the like.

The metal lead 100 is not limited in particular as long as being made of a conductive metal, and may include at least one selected from lithium (Li), nickel (Ni), aluminum (Al), copper (Cu) and iron (Fe), for instance.

The metal lead 100 and the anode 200 for the lithium metal battery may be connected by being joined by means of welding and the like. Although welding is not limited in particular as long as being used in the art, ultrasonic welding may be applied based on that the anode 200 for the lithium metal battery includes the relatively softness. In a state in which the metal lead 100 and the anode 200 for the lithium metal battery are joined, a joined portion is pressurized by an ultrasonic welding device and vibrated by ultrasonic waves simultaneously, in order for welding to be performed by frictional heat generated thereby. In particular, the ultrasonic welding device may include an anvil including a protruding part to prevent shaking of a welded target while maintaining pressurizing force and effectively deliver ultrasonic waves to the welded target. The anvil may be positioned such that a portion having the protruding part is in contact to a portion where the metal lead 100 and the anode 200 for the lithium metal battery are joined, in order to pressurize the portion where the same are joined and deliver ultrasonic waves to vibrate the same.

The electrode assembly 10 for the lithium metal battery may further include an insulation film 300. The insulation film 300 may be provided in a shape enveloping one part of the metal lead 100. An electric short circuit of the electrode assembly 10 may be prevented by means of the insulation film 300. Meanwhile, the insulation film 300 may be disposed at an area other than an area where the metal lead 100 and the anode 200 for the lithium metal battery are connected. Although the insulation film 300 is not limited in particular as long as being used in the art, a polyolefin material may be applied, for instance.

The anode 200 for the lithium metal battery may include a body part 210 and an anode tab 220. The anode tab 220 may extend from one side edge of the body part 210. Further, the anode tab 220 may be connected to the metal lead 100, and may be disposed with a connection part to be connected to the metal lead 100.

The body part 210 may include a lithium metal. The anode tab 220 may include the lithium metal. The body part 210 and the anode tab 220 may be monolithic. For instance, the anode 200 for the lithium metal battery that monolithically includes the body part 210 and the anode tab 220 may be acquired by cutting a lithium metal sheet. Although the cutting method of the lithium metal sheet is not limited in particular as long as being used in the art, an ultrasonic cutting method may be applied as an example. Patent Laid-Open Publication No. 10-2022-0035741 of the Republic of Korea may be referred as an example of the ultrasonic cutting method.

Meanwhile, although the anode 200 for the lithium metal battery is not limited in particular, the thickness thereof may be around 40 *µ*m to 60 *µ*m or 45 to 50 *µ*m.

The metal lead 100 may be connected to the anode tab 220. In particular, the metal lead 100 may be connected to at least one part of the anode tab 220, and may be connected by being joined by means of welding and the like. Accordingly, the metal lead 100 and the anode tab 220 may be electrically connected, and ultimately, the metal lead 100 and the anode 200 for the lithium metal battery may be electrically connected.

Meanwhile, when the anode tab 220 including the lithium metal is connected to the metal lead 100, the anode tab 220 may extend due to the softness of the lithium metal, causing the anode tab 220 extending thereby to deviate from the metal lead 100, thereby causing problems in sealing and deterioration in the performance of a battery in general when a battery cell is manufactured. In order to prevent such problems, the anode 200 for the lithium metal battery according to an exemplary embodiment of the present disclosure may have a specific shape.

In the anode 200 for the lithium metal battery, the anode tab 220 may be configured such that a width W₁ of an end part 221 is different from a width W₂ of a connecting part 222 that connects the end part 221 and the body part 210. In other words, the anode tap 220 before welding may be configured such that the width W₁ of the end part 221 is different from the width W₂ of the connecting part 222 that connects the end part 221 to the body part 210. The connecting part 222 may signify the boundary of the anode tab 220 and the body part 210.

The width W₁ of the end part 221 may be configured to be narrower than the width W₂ of the connecting part 222. In other words, the width W₁ of the end part 221, before welding, may be configured to be narrower than the width W₂ of the connecting part 222. Because the anode tab 220 has such a shape, the anode tab 220 may not deviate from the metal lead 100 despite the softness of the lithium metal.

In the anode tab 220, a ratio (W₁/W₂) of the width W₁ of the end part 221 and the width W₂ of the connecting part 222 may be in a range of 0.1 to 0.6, 0.2 to 0.55 or 0.3 to 0.5. In other words, in the anode tab 220, before welding, the ratio (W₁/W₂) of the width W₁ of the end part 221 and the width W₂ of the connecting part 222 may be in the above-described range. In case that the ratio (W₁/W₂) of the width W₁ of the end part 221 and the width W₂ of the connecting part 222 satisfies the above-described range, excellent connection quality (joining or welding quality) may be guaranteed, and the anode tab 220 may be prevented from deviating from the metal lead 100 despite the softness of the lithium metal.

In the anode tab 220, a ratio (W₁/W₃) of the width W₁ of the end part 221 and a width W₃ of the body part 210 may be in a range of 0.01 to 0.5, 0.02 to 0.4, 0.03 to 0.3, 0.04 to 0.2 or 0.05 to 0.1. In other words, in the anode tab 220, before welding, the ratio (W₁/W₃) of the width W₁ of the end part 221 and the width W₃ of the body part 210 may be in the above-described range. In case that the ratio (W₁/W₃) of the width W₁ of the end part 221 and the width W₃ of the body part 210 satisfies the above-described range, the anode tab 220 may be prevented from deviating from the metal lead 100 despite the softness of the lithium metal.

In the anode tab 220, a ratio (W₂/W₃) of the width W₂ of the connecting part 222 and the width W₃ of the body part 210 may be in a range of 0.05 to 0.5, 0.06 to 0.45, 0.07 to 0.4, 0.08 to 0.35, 0.09 to 0.3, 0.1 to 0.25, 0.11 to 0.2 or 0.12 to 0.18. In other words, in the anode tab 220, before welding, the ratio (W₂/W₃) of the width W₂ of the connecting part 222 and the width W₃ of the body part 210 may be in the above-described range. In case that the ratio (W₂/W₃) of the width W₂ of the connecting part 222 and the width W₃ of the body part 210 satisfies the above-described range, the anode tab 220 may be prevented from deviating from the metal lead 100 despite the softness of the lithium metal.

The anode tab 220 may have a shape in which a width gradually decreases in a direction away from the body part 210. In other words, the anode tab 220, before welding may have a shape in which a width gradually decreases in a direction away from the body part 210. Referring to FIG. 2 that illustrates the metal lead 100 and the anode 200 for the lithium metal battery, before being joined by welding, the anode tab 220 is configured such that the width W₁ of the end part 221 is narrower than the width W₂ of the connecting part 222, and may have a shape in which a width gradually decreases in a direction away from the body part 210 (in other words, a +y direction in FIG. 2). Here, the meaning of the width gradually decreasing may signify that a width at a particular point between the end part 221 and the connecting part 222 is greater than the width W₁ of the end part 221 and narrower than the width W₂ of the connecting part 222, and that the width continuously or discontinuously becomes narrower towards the end part 221. For instance, the anode tab 220 may have a shape in which a width gradually and continuously decreases according to a predetermined ratio, in other words, a shape of the anode tab 220 in a trapezoidal shape as illustrated in FIG. 2. Alternatively, if necessary, a side portion border of the anode tab 220 may have a shape of being inwardly concave, or being outwardly convex.

Alternatively, unlike FIG. 2, the anode tab 220 may have a shape in which a width gradually and discontinuously decreases in a stair shape.

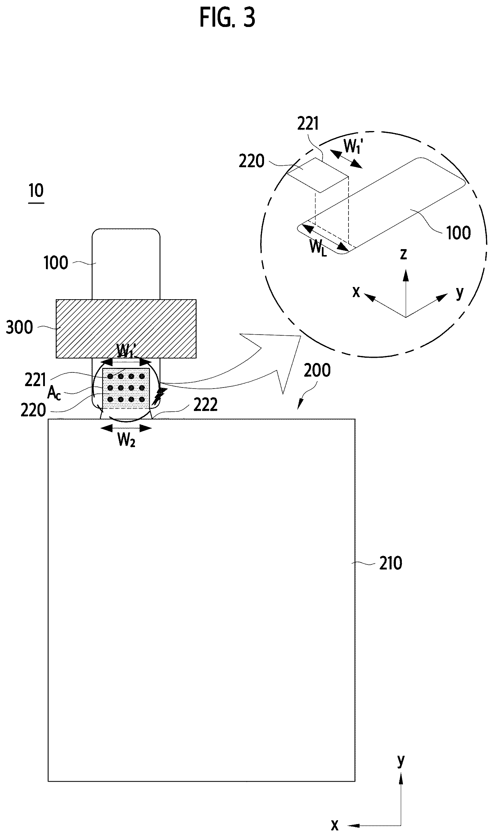

FIG. 3 is a plan view illustrating a rear surface, which is at least one part of the electrode assembly 10 for the lithium metal battery according to an exemplary embodiment of the present disclosure. FIG. 3 illustrates the metal lead 100 and the anode 200 for the lithium metal battery after being joined by welding.

The electrode assembly 10 for the lithium metal battery may include the anode 200 for the lithium metal battery including the body part 210 and the anode tab 220 extending from one side edge of the body part 210 and includes the lithium metal, and the metal lead 100 connected to the anode tab 220. In the electrode assembly 10 for the lithium metal battery, a connection area A_{C} where the metal lead 100 and the anode tab 220 are connected may not extend beyond the outer side border of the metal lead 100. In other words, the connection area A_{C} may not extend beyond the outer side border of the metal lead 100, even when the metal lead 100 and the anode tab 220 are connected by being joined by means of welding and the like. The connection area A_{C} may signify an area where the metal lead 100 and the anode tab 220 are joined by means of welding and the like.

An area A₁ of the connection area A_{C} with respect to an area A₂ of the anode tab 220 may be 50% or greater, 55% or greater, 60% or greater, 65% or greater, 70% or greater, 75% or greater, 80% or greater, 85% or greater or 90% or greater. The area A₂ of the anode tab 220 signifies the entire area of one surface being in contact with the metal lead 100. In case that the area A₁ of the connection area A_{C} and the area A₂ of the anode tab 220 satisfy the ratio, excellent connection quality (joining or welding quality) may be guaranteed.

In the electrode assembly 10 for the lithium metal battery, the anode tab 220 may be joined to the metal lead 100 by welding. Further, the anode tab 220, before being joined by welding, may include the above-described feature of the anode 200 for the lithium metal battery. In other words, for instance, the anode tab 220, before being joined by welding, may be configured in order for the width W₁ of the end part 221 to be narrower than the width W₂ of the connecting part 222 that connects the end part 221 and the body part 210.

Meanwhile, in a process in which the anode tab 220 is joined to the metal lead 100 by welding, the width W₁ of the end part 221 of the anode tab 220 may become greater than before welding due to the softness of the lithium metal. A width W₁' of the end part 221 of the anode tab 220 which is completely joined by welding may be greater than the width W₁ of the end part 221 before welding. Referring to FIG. 3, in the anode tab 220, after being joined by welding, the width W₁' of the end part 221 may be equal to or smaller than a width W_{L} of the metal lead 100 at a position corresponding to the end part 221. In other words, the anode tab 220 may not extend beyond the outer side border of the metal lead 100 even after being joined by welding. The position of the metal lead 100 corresponding to the end part 221 may signify a position on the metal lead 100 where the end part 221 overlaps with a figure obtained by perpendicularly projecting the anode tab 220 onto the metal lead 100.

A ratio (W₁'/W_{L}) of the width W₁' of the end part 221 of the anode tab 220 that is completely joined by welding and the width W_{L} of the metal lead 100 may be in a range of 0.5 to 1, 0.6 to 1, 0.7 to 1, 0.8 to 1 or 0.9 to 1. The ratio (W₁'/W_{L}) of the width W₁' of the end part 221 of the anode tab 220 that is completely joined by welding and the width W_{L} of the metal lead 100, which satisfies the range, may signify that excellent connection quality (joining or welding quality) is guaranteed, and that the anode tab 220 does not deviate from the metal lead 100 despite the softness of the lithium metal. The ratio (W₁'/W_{L}) may be embodied by means of welding of the anode 200 for the lithium metal battery and the metal lead 100 which are described above.

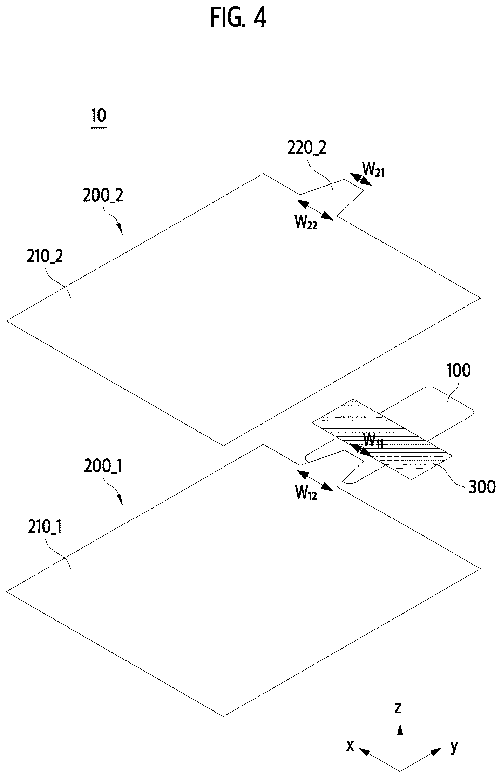

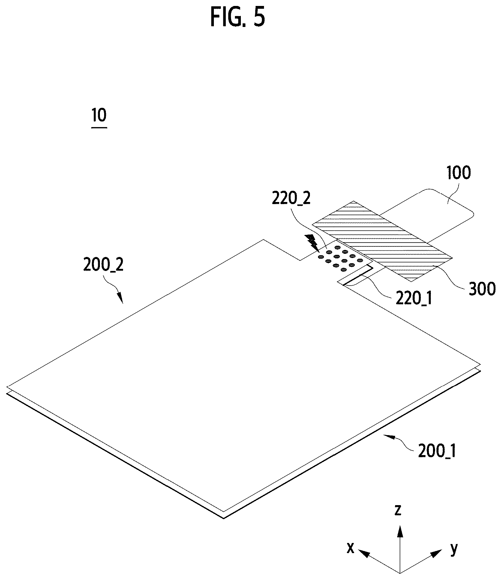

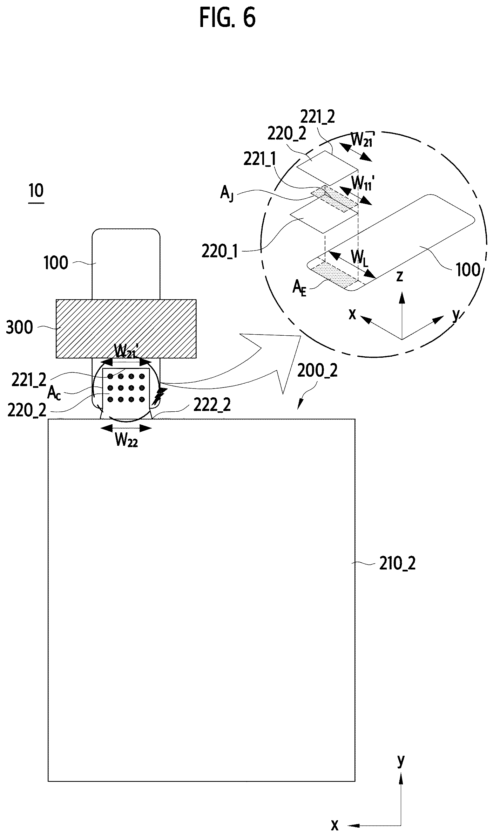

FIG. 4 is a perspective view that illustrates at least one part of the electrode assembly 10 for the lithium metal battery according to an exemplary embodiment of the present disclosure. FIG. 4 illustrates the metal lead 100 and the anode 200 for the lithium metal battery before being joined by welding. FIG. 5 is a perspective view illustrating at least one part of the electrode assembly 10 for the lithium metal battery according to an exemplary embodiment of the present disclosure. FIG. 5 illustrates the metal lead 100 and the anode 200 for the lithium metal battery after being joined by welding. FIG. 6 is a plan view that illustrates a rear surface, which is at least one part of the electrode assembly 10 for the lithium metal battery according to an exemplary embodiment of the present disclosure. FIG. 6 illustrates the metal lead 100 and the anode 200 for the lithium metal battery being joined by welding.

The electrode assembly 10 for the lithium metal battery may include the anode 200 for the lithium metal battery including a plurality of anodes and the metal lead 100. The plurality of anodes may include a first anode 200_1 and a second anode 200_2, and a one-by-one stacked structure.

Each anode that constitutes the plurality of anodes including the first anode 200_1 and the second anode 200_2 may include the body part 210 and the anode tab 220 that is extending from one side edge of the body part 210 and includes the lithium metal. In other words, the first anode 200_1 may include a body part 210_1 and an anode tab 220_1, and the second anode 200_2 may include a body part 210_2 and an anode tab 220_2.

The first anode 200_1 may be positioned such that the anode tab 220_1 is in direct contact to the metal lead 100 to be connected thereto. In other words, among the plurality of anodes, an anode being in direct contact to the metal lead 100 may be the first anode 200_1. The anode tab 220_1 of the first anode 200_1 may be connected to the metal lead 100 by being joined by welding and the like.

Among the plurality of anodes including the stacked structure, the second anode 200_2 is positioned at an outermost part so as not to be in direct contact to the metal lead 100.

The plurality of anodes may form the stacked structure by being joined by welding. Specifically, the plurality of anodes may form the stacked structure by being joined by welding in order for the end part 221 of each anode tab 220 to match. In other words, the plurality of anodes may form the stacked structure by stacking and aligning in order for the end part 221 of each anode tab 220 to match before the anode tabs 220 of each anode may be electrically connected by means of welding. At the same time as the first anode 200_1 is welded to the metal lead 100, the plurality of anodes may be welded, in order for the anode 200 for the lithium metal battery to be ultimately and electrically connected to the metal lead 100.

Meanwhile, in case that the anode 200 for the lithium metal battery includes the plurality of anodes, each anode may independently include the above-described feature included by the anode 200 for the lithium metal battery. For instance, before being joined by welding, each anode tab 220 of the plurality of anodes may be configured such that the width W₁ of the end part 221 is different from the width W₂ of the connecting part 222 that connects the end part 221 and the body part 210. In other words, before being joined by welding, the anode tab 220_1 of the first anode 200_1 may be configured in order for a width W₁₁ of an end part 221_1 to be narrower than a width W₁₂ of a connecting part 222_1 that connects the end part 221_1 and the body part 210_1. Further, before being joined by welding, the anode tab 220_2 of the second anode 200_2 may be configured in order for a width W₂₁ of an end part 221_2 to be narrower than a width W₂₂ of a connecting part 222_2 that connects the end part 221_2 and the body part 210_2.

The width W₁₁ of the end part 221_1 of the anode tab 220_1 of the first anode 200_1 before being joined by welding may be equal to the width W₂₁ of the end part 221_2 of the anode tab 220_2 of the second anode 200_2.

Alternatively, the width W₁₁ of the end part 221_1 of the anode tab 220_1 of the first anode 200_1 may be different from the width W₂₁ of the end part 221_2 of the anode tab 220_2 of the second anode 200_2. For instance, the width W₁₁ of the end part 221_1 of the anode tab 220_1 of the first anode 200_1 may be wider than the width W₂₁ of the end part 221_2 of the anode tab 220_2 of the second anode 200_2.

Meanwhile, the width W₁ of the end part 221 of each anode tab 220 of the plurality of anodes, before being joined by welding, may gradually widen from the second anode 200_2 positioned at the outermost part to the first anode 200_1. Here, the meaning of the width gradually widening may signify that the width W₁ of the end part 221 of the anode tab 220 continuously or discontinuously widens from the second anode 200_2 to the first anode 200_1. For instance, in case that the plurality of anodes are included, the width W₁ of the end part 221 of the anode tab 220 may have a shape in which a width gradually and continuously decreases according to a predetermined ratio from the second anode 200_2 to the first anode 200_1, or a shape in which a width gradually and discontinuously decreases in a stair shape.

In a process in which the first anode 200_1 is welded to the metal lead 100 and the plurality of anodes are welded, the width W₁ of the end part 221 of each anode tab 220 of the plurality of anodes may become greater than before welding due to the softness of the lithium metal. Referring to FIG. 5 and FIG. 6, a width W₁₁' of the end part 221_1 of the anode tab 220_1 of the first anode 200_1, which is completely joined by welding may be greater than the width W₁₁ before welding. Further, a width W₂₁' of the end part 221_2 of the anode tab 220_2 of the second anode 200_2 which is completely joined by welding may be greater than the width W₂₁ before welding.

Referring to FIG. 6, the width W₁₁' of the end part 221_1 of the anode tab 220_1 of the first anode 200_1 after being joined by welding may be equal to or smaller than the width W_{L} of the metal lead 100 at a position corresponding to the end part 221_1. Further, the width W₂₁' of the end part 221_2 of the anode tab 220_2 of the second anode 200_2 after being joined by welding may be equal to or smaller than the width W_{L} of the metal lead 100 at a position corresponding to the end part 221_1 of the anode tab 220_1 of the first anode 200_1. In other words, each of the anode tab 220_1 and the anode tab 220_2 of the first anode 200_1 and the second anode 200_2 may not extend beyond the outer side border of the metal lead 100 even after being joined by welding. The position of the metal lead 100 corresponding to the end part 221_1 of the anode tab 220_1 of the first anode 200_1 may signify a position on the metal lead 100 where the end part 221_1 overlaps with a figure obtained by perpendicularly projecting the anode tab 220_1 onto the metal lead 100. Even in a case in which additional anodes are disposed between the first anode 200_1 and the second anode 200_2 among the plurality of anodes, the additionally disposed anodes may include the above-described feature.

Further, in case that the anode 200 for the lithium metal battery includes the plurality of anodes, the first anode 200_1 joined to the metal lead 100 may include a feature between the metal lead 100 and the anode 200 for the lithium metal battery. For instance, in the electrode assembly 10 for the lithium metal battery, the connection area A_{C} in which the metal lead 100 and the anode tab 220_1 of the first anode 200_1 are connected may not extend beyond the outer side border of the metal lead 100. In other words, even when the metal lead 100 and the anode tab 220_1 of the first anode 200_1 are connected by being joined by welding and the like, the connection area A_{C} may not extend beyond the outer side border of the metal lead 100. The connection area A_{C} may signify an area in which the metal lead 100 and the anode tab 220_1 of the first anode are joined by welding and the like.

The plurality of anodes with the stacked structure may be formed by being joined by welding in order for the end part 221 of each anode tab 220 to match. Here, a joint area A_{J} connected between each anode may be formed. In other words, the joint area A_{J} may signify a joined area between one anode among the plurality of anodes and another anode joined to the anode thereof. When the joint area A_{J} projects perpendicularly to a plane at which the metal lead 100 is located, a corresponding area A_{E} may be formed. In other words, referring to FIG. 6, the corresponding area A_{E} may be an area in which the joint area A_{J} projects perpendicularly in a -z direction to touch a plane at which the metal lead 100 is positioned. Here, the corresponding area A_{E} may not extend beyond the outer side border of the metal lead 100. Each corresponding area A_{E} which is formed by each joint area A_{J} may not extend beyond the outer side border of the metal lead 100 even in a case where there are a plurality of joint areas A_{J}.

The lithium metal battery according to an example of the present disclosure may include at least one of the anode 200 for the lithium metal battery and the electrode assembly 10 for the lithium metal battery which are described above. Although the lithium metal battery does not limit the type thereof in particular, the lithium metal battery may be a lithium-sulfur battery, a lithium air battery and the like.

### EXAMPLES

### Experimental examples

### Example embodiment 1.

Prepared are seven sheets of anodes before welding, including an anode tab in which a width W₁ of an end part is approximately 3 mm, a width W₂ of a connecting part that connects the end part and a body part is approximately 6 mm (in other words, W₁/W₂= approximately 0.5), and a ratio (W₂/W₃) of the width W₂ of the connecting part and a width W₃ of the body part is approximately 0.15. All the prepared anodes are made of a lithium metal material, and one sheet has a thickness of approximately 45 *µ*m to 50 *µ*m. Seven sheets of anodes are sequentially stacked one by one in such that the end parts match, and an anode positioned at a lowermost end is in contact to an end portion of a metal lead. An end part of an anode is positioned at a portion which is at approximately 2.5 mm in an inward direction from an end of the metal lead. Further, the metal lead has a width of around 6 mm, and an insulation film is installed at a portion which is at approximately 3 mm in an inward direction from an end.

An anvil of an ultrasonic welding device is positioned at an area being in contact with the metal lead from the end part of the anode (in other words, a connection area A_{C}), in order for the anvil to pressurize the area to deliver ultrasonic waves, thereby completing ultrasonic welding. As ultrasonic welding was performed, a width of the end part of the anode gradually widened.

After welding was finished, a width W₁' of an end part of an anode positioned in an outermost part was approximately 6 mm, and all the anodes did not extend beyond the outer side border of the metal lead, providing excellent welding quality.

### Example embodiment 2.

Apart from preparing seven sheets of anodes before welding, including an anode tab in which a width W₁ of an end part is approximately 2 mm, a width W₂ of a connecting part that connects the end part to a body part is approximately 6 mm (in other words, W₁/W₂=0.33), and a ratio (W₂/W₃) of the width W₂ of the connecting part and a width W₃ of the body part is approximately 0.15, ultrasonic welding was completed in the same manner as in Example Embodiment 1.

After welding was completed, a width W₁' of an end part of an anode positioned at an outermost part was approximately 5.5 mm, and all the anodes did not extend beyond the outer side border of the metal lead, providing excellent welding quality.

### Comparative Example 1.

Apart from preparing seven sheets of anodes before welding, including an anode tab (W₁/W₂=1) in which a width W₁ of an end part is approximately 6 mm, and a width W₂ of a connecting part that connects the end part to a body part is approximately 6 mm, ultrasonic welding was completed in the same manner as in Example Embodiment 1.

After welding was completed, a width W₁' of an end part of an anode positioned at an outermost part was approximately 7.5 mm, and all the anodes extended beyond the outer side border of the metal lead.

The anode 200 for the lithium metal battery, the electrode assembly for the lithium metal battery and the like according to an example of the present disclosure may be widely applied to an electric vehicle, a battery charging station and other green technology fields such as solar photovoltaic power generation and wind power generation that use a battery. Further, the anode 200 for the lithium metal battery, the electrode assembly for the lithium metal battery and the like according to an example of the present disclosure may be applied to an eco-friendly electric vehicle, a hybrid vehicle and the like to suppress atmospheric pollution and greenhouse gas emission to prevent climate change.

In the above, various exemplary embodiments of the present disclosure are described in detail. However, it will be apparent to those with average knowledge in the technical field that scope of rights of the present disclosure is not limited thereto, and various modifications and variations are possible without departing from the technical spirit of the present disclosure as set forth in the claims. Further, the above-described exemplary embodiment may be implemented with some elements deleted, and each exemplary embodiment may be implemented in combination with each other.

### Description of Symbols

10... Electrode assembly for a lithium metal battery
100... Metal lead
200... Anode for a lithium metal battery
200_1... First anode
200_2... Second anode
210... Body part
210_1... Body part of first anode
210_2... Body part of second anode
220... Anode tab
220_1... Anode tab of first anode
220_2... Anode tab of second anode
221... End part
221_1... End part of first anode
221_2... End part of second anode
222... Connecting part
222_1... Connecting part of first anode
222_2... Connecting part of second anode
300... Insulation film

## Claims

1. An anode for a lithium metal battery, the anode comprising:
a body part; and
an anode tab extending from one side edge of the body part and connected to a metal lead, and comprises a lithium metal,
wherein the anode tab is configured in order for a width W₁ of an end part to be different from a width W₂ of a connecting part that connects the end part and the body part.

2. The anode for the lithium metal battery of claim 1, wherein the width W₁ of the end part is narrower than the width W₂ of the connecting part.

3. The anode for the lithium metal battery of claim 2, wherein a ratio (W₁/W₂) of the width W₁ of the end part and the width W₂ of the connecting part is in a range of 0.1 to 0.6.

4. The anode for the lithium metal battery of claim 2, wherein the anode tab comprises a shape in which a width gradually decreases in a direction away from the body part.

5. An electrode assembly for a lithium metal battery, the electrode assembly comprising:
an anode for the lithium metal battery in which provided are a body part and an anode tab extending from one side edge of the body part and comprising a lithium metal; and
a metal lead connected to the anode tab,
wherein the metal lead and the anode tab are connected at a connection area A_{C} that does not extend beyond an outer side border of the metal lead.

6. The electrode assembly for the lithium metal battery of claim 5, wherein
the anode tab is joined to the metal lead by welding,
wherein the anode tab, before being joined by welding, is configured such that a width W₁ of an end part is narrower than a width W₂ of a connecting part that connects the end part and the body part.

7. The electrode assembly for the lithium metal battery of claim 6, wherein, in the anode tab, after being joined by the welding, a width W₁' of an end part is equal to or smaller than a width W_{L} of the metal lead at a position corresponding to the end part.

8. The electrode assembly for the lithium metal battery of claim 7, wherein a ratio (W₁'/W_{L}) of the width W₁' of the end part and the width W_{L} of the metal lead is in a range of 0.5 to 1.

9. The electrode assembly for the lithium metal battery of claim 5, wherein an area A₁ of the connection area A_{C} to an area A₂ of the anode tab is 50% or greater.

10. An electrode assembly for a lithium metal battery, the electrode assembly comprising:
an anode for the lithium metal battery comprising a plurality of anodes having a one-by-one stacked structure comprising a first anode and a second anode and a metal lead,
wherein each of the plurality of anodes comprises a body part and an anode tab extending from one side edge of the body part and comprising a lithium metal,
wherein the first anode is positioned such that the anode tab is in direct contact with the metal lead to be connected to the metal lead, and the second anode is positioned at an outermost part of the stacked structure such that it is not in direct contact with the metal lead, and
wherein the metal lead and an anode tab of the first anode are connected at a connection area A_{C} that does not extend beyond an outer side border of the metal lead.

11. The electrode assembly for the lithium metal battery of claim 10,
wherein the anode tab of the first anode is joined to the metal lead by welding,
wherein the plurality of anodes are joined by welding to form the stacked structure, and
wherein the anode tab of the first anode, before being joined by the welding, is configured such that a width W₁₁ of an end part is narrower than a width W₁₂ of a connecting part that connects the end part and the body part, and an anode tab of the second anode is configured in order for a width W₂₁ of an end part to be narrower than a width W₂₂ of a connecting part that connects the end part and a body part.

12. The electrode assembly for the lithium metal battery of claim 10,
wherein the plurality of anodes form the stacked structure by being joined by welding such that an end part of each anode tab matches, and
wherein a corresponding area A_{E} formed when each joint area A_{J} connected between the anodes projects perpendicularly to a plane where the metal lead is positioned does not extend beyond the outer side border of the metal lead.

13. The electrode assembly for the lithium metal battery of claim 12, wherein the width W₁₁ of the end part of the anode tab of the first anode, before being joined by the welding, is equal to or wider than the width W₂₁ of the end part of the anode tab of the second anode.

14. The electrode assembly for the lithium metal battery of claim 12, wherein a width W₁ of an end part of each anode tab of the plurality of anodes, before being joined by the welding, gradually widens from the second anode to the first anode.

15. The electrode assembly for the lithium metal battery of claim 12, wherein a width W₁₁' of the end part of the anode tab of the first anode and a width W₂₁' of the end part of the anode tab of the second anode, after being joined by the welding, are equal to or smaller than a width W_{L} of the metal lead at a position corresponding to the end part of the anode tab of the first anode.
